# EUROPEAN PATENT APPLICATION

(11) **EP 1 038 567 A1**
(43) Date of publication of application: **27.09.2000**
(21) Application number: 99200546.2
(22) Date of filing: 25.02.1999
(51) Int. Cl.: B01D 46/26

(54) **Filtering device for separating dust from aeriform fluids and in particular for separating textile dust**

(71) Applicant: AIRTEC DI GRIECO ANNAMARIA, I-20050 Triuggio (MI) (IT)
(72) Inventor: Grieco, Claudio, 20052 Monza MI (IT)
(74) Representative: Arena, Giovanni

(57) **Abstract**

The filtering device comprises:
- a drum (10) provided with a filter membrane (20) along its cylindrical surface and rotating around a hollow shaft (11);
- at least one blowing nozzle emitting air jets, with its outlet facing onto the surface of the filter membrane (20) on the side of the surface from which the filtered air flows;
- at least one nozzle (21) for collecting the dust deposited on the surface of the filter membrane (20) abutting upon said hollow shaft (11) with its inlet facing onto the surface of said filter membrane (20) on the side impinged by the flow of dust-laden air and arranged in a position opposite the outlet of the blowing nozzle;
- an Archimedean screw is inserted in the aforesaid hollow shaft (11), which collects the dust descending by force of gravity onto the bottom of the collection nozzle (21) and by rotating conveys it in compressed form out of the hollow shaft, the compressed dust outlet end of which is provided with a valve (29) designed to allow the dust to exit and at the same time to prevent air from entering the hollow shaft (11).

## Description

This invention refers to a filtering device for separating dust from aeriform fluids and especially suitable for separating textile dust.

In certain industries the problem of purifying the air to rid it of dust produced during production or manufacturing processes is of the utmost importance. This is especially true for the textile sector.

There are various known systems for purifying the air of textile dust. One of these systems is described in the European Patent no. 389 045. It consists of a filtering device comprising a drum rotating on its axis provided with a filter membrane along its cylindrical surface and at least one inlet for sucking up the dust deposited on the surface of the filter membrane.

Arranged on the side of the surface of the filter membrane from which the filtered air flows is at least one blowing outlet while arranged on the side of the surface of the filter membrane impinged by the flow of dust-laden air is a suction inlet arranged facing the aforesaid blowing outlet. The blowing outlet emits pulsed air jets which detach the dust deposited on the filter membrane so as to allow the dust to be sucked up by the suction inlet. The dust thus captured by the suction inlet is conveyed into a duct by means of a vacuum flow created by an aspirator provided in the duct and then sent on to filters and means for compressing and collecting the dust.

This method of purifying the air, however, as regards the system for sucking, compressing and collecting dust, presents the following drawbacks:
- the high cost of the separated-dust suction, compressing and collecting system;
- the considerable overall dimensions of the system itself;
- the noisiness of the aspirator whose rotor rotates at a speed in the region of 2,900 r.p.m. and the danger of the dust bursting into flames in the event of overheating of the rotor or emission of sparks caused by the rotor blades scraping against the metal walls containing the latter.

The purpose of this invention is to provide a filtering device free from the aforesaid drawbacks.

In an embodiment according to the invention, this device comprises:
- a drum provided with a filter membrane along its cylindrical surface and rotating around a hollow shaft;
- at least one blowing nozzle emitting air jets with its mouth facing onto the surface of the filter membrane on the side of the surface from which the filtered air flows;
- at least one nozzle for collecting the dust deposited on the surface of the filter membrane abutting upon said hollow shaft with its inlet facing onto the surface of said filter membrane on the side impinged by the flow of dust-laden air and arranged in a position opposite the outlet of the blowing nozzle;
and is characterized in that:
- an Archimedean screw is inserted in the aforesaid hollow shaft, which collects the dust descending by force of gravity onto the bottom of the collection nozzle and by rotating conveys it in compressed form out of the hollow shaft, the compressed dust outlet end of which is provided with a valve designed to allow the dust to exit and at the same time to prevent air from entering the hollow shaft;
- the axis of the dust collection nozzle slants by at least 50° compared to a horizontal plane.

According to a variation of the aforesaid embodiment opposite the section in which the collection nozzle is abutted the hollow shaft has a perforated surface with holes of a sufficiently small diameter to retain the dust particles.

In this case, the air jets emitted by the blowing nozzle can create a flow of air within the collection nozzle which facilitates the conveyance of the dust on the bottom of the nozzle also in the absence of force of gravity and consequently the slant of the axis of the collection nozzle can be less than the aforesaid 50°.

The principles of this invention are clarified by the following description of possible exemplificative and non-restrictive embodiments making reference to the accompanying drawings in which:
- Fig.1:: shows a cross-sectional scrap view of the nozzles and the drum with the filtering device membrane as claimed in the European Patent no. 389 045;
- Fig.2:: shows a schematic view of a dust suction, compression and collection system used for the filtering device of Fig. 1;
- Fig.3:: shows a perspective view of a textile dust gathering and separating machine making use of a filtering device according to the invention;
- Fig.4:: shows a front view of the machine of Fig. 3;
- Fig.5:: shows a cross-sectional side view of the same machine;
- Fig.6:: shows a cross-sectional view of the blowing and suction nozzles and a section of the filter membrane;
- Fig.7:: shows a left-hand side view of the nozzles of Fig.6;
- Fig.8:: shows a left-hand side view of the nozzles of Fig.6, according to a variation.

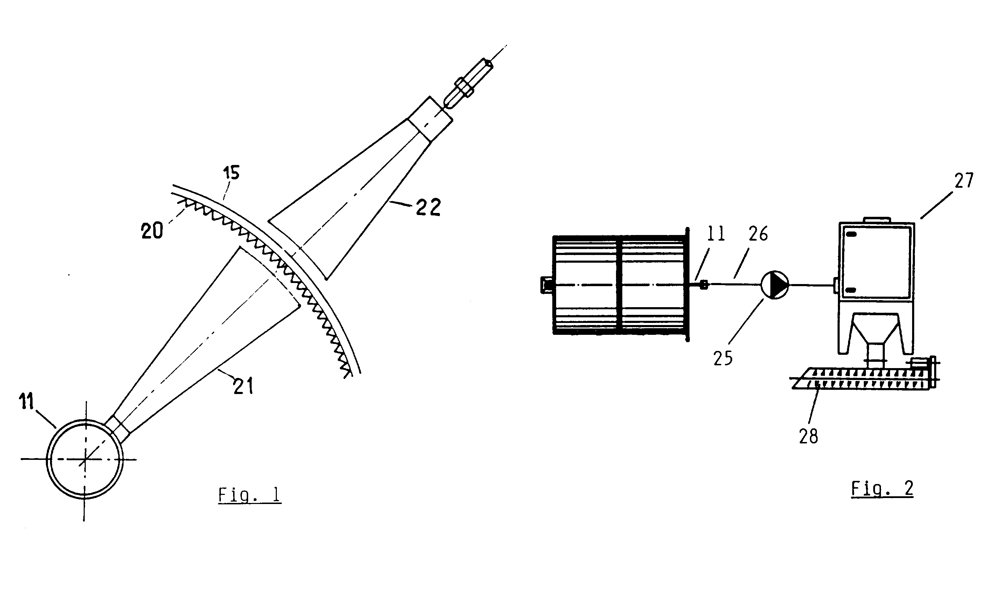

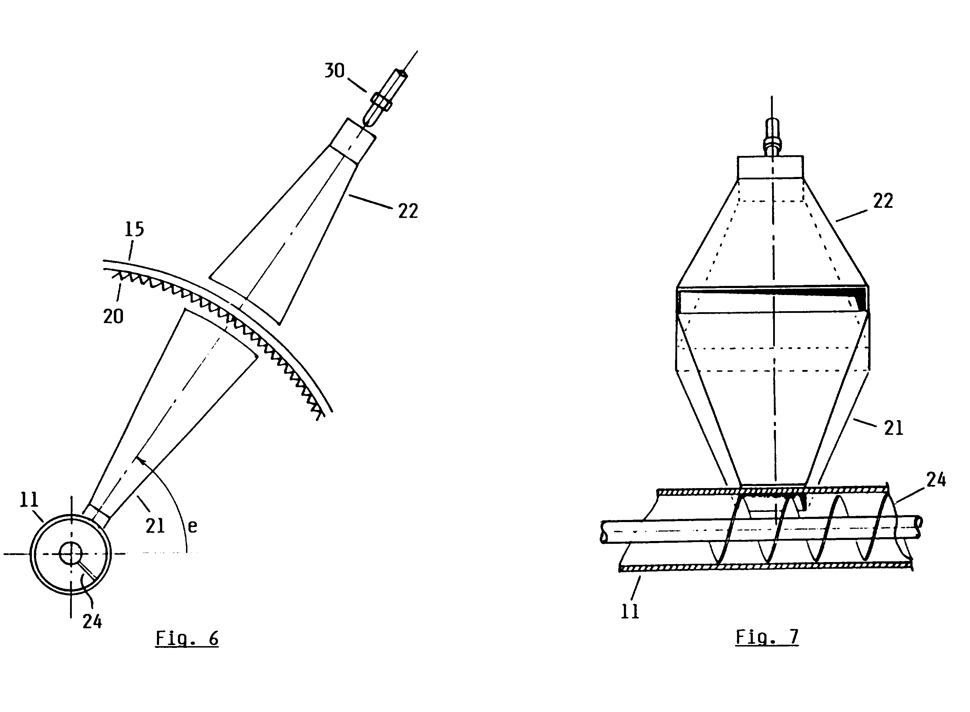

The operating principle of the filtering device claimed in European Patent no. 389 045 is described here briefly with reference to Fig.1 (corresponding to Fig.5 of said European Patent) representing a cross-sectional scrap view of the nozzles 21 and 22 and of the drum 15 with filter membrane 20 rotating around the hollow shaft 11. According to such principle the dust-laden air is introduced into the drum 15 and sucked out of the drum through the membrane 20 due to the vacuum created outside the drum by an aspirator arranged downstream of the filtering device. The dust that settles on the internal surface of the filter membrane is removed by means of pulsed air jets emitted by the nozzle 22 and is conveyed into the nozzle 21 due to the suction flow created at the mouth of the nozzle 21 by an aspirator 25 secured to the hollow shaft 11 as shown in Fig.2 which schematically represents a dust suction, compression and collection system of known type used for the filtering device of Fig.1. According to Fig.2 the dust coming out of the hollow shaft 11 is conveyed by means of a duct 26 which is fitted with the aspirator 25 to a filtering device 27 of the "jet filter" type in which the dust is separated from the air and then introduced into the compression screw 28.

The filtering device according to this invention is an evolution of the filtering device forming the subject matter of the aforesaid European Patent by presenting improved features as regards the system for collecting and compressing the dust separated from the filter.

It derives from the overcoming the prejudice that in order to induce the dust removed by the air jets emitted by 22 to enter the nozzle 21 and be conveyed through the hollow shaft 11 it is necessary to have a suction flow within the nozzle 21 in order to prevail against the suction force exerted by the vacuum outside the drum. In reality it results that:
- the air jets emitted by 22 even though attenuated by the dust blanket and by their passage through the filter membrane 20 can be sufficient to prevent the dust removed from returning onto the filter membrane due to the suction force exerted by the vacuum outside the drum and to force the removed dust into the inlet of the nozzle 21;
- if the axis of the nozzle 21 is sufficiently slanted with respect to the horizontal plane the force of gravity acting on the removed dust entering the nozzle 21 may be sufficient to force the dust down onto the bottom of the nozzle and then into the hollow shaft 11;
- by inserting an Archimedean screw into the hollow shaft the dust can be conveyed out of the hollow shaft and compressed at the same time.

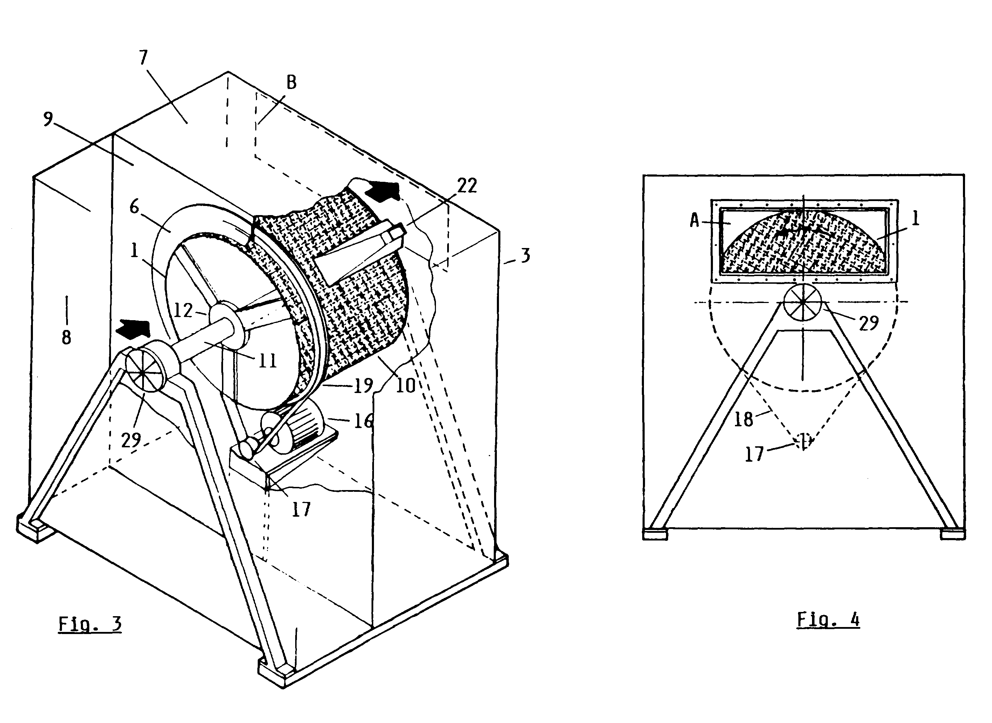

Figs. 3,4,5,6 and 7 show a filtering device according to the invention.

The dust-laden air, through the inlet A, enters a first chamber 8 of a box-shaped housing 3 and is then conveyed through the cylindrical shell of a drum 10 into a second chamber 7 from where it flows out through outlet B.

Infiltration of the dust-laden air into the chamber 7 is prevented both by the walls 9 separating chamber 7 from chamber 8 and by the felt packing 6 resting along the entire outer edge of the inlet 1 of the drum 10.

The cylindrical drum 10 arranged inside the chamber 7 rotates around the hollow shaft 11 by means of bearings 12 and 13 on which it rests. Said drum has a base 14 consisting of a solid metal disk and a cylindrical shell consisting along section "a" of solid sheet steel and along section "b" of a metal frame or wide-mesh net 15 onto which the dust filtering membrane 20 is secured.

The drum 10 can be made to rotate by means of the motor 16 through the pulley 17, the belt 18 and the pulley 19 secured to section "a" of the cylindrical shell.

Fig.6 shows a cross-sectional view of a section of the net 15 and of the filter membrane 20. Said filter membrane consists of a fine-mesh net made of stainless steel wire with a diameter of the wires and width of the aperture of each mesh in the region of a few dozen µ.

Very advantageously this net is pleated with pleats parallel to the drum axis.

The parts 21 and 22 respectively represent a suction nozzle and a blowing nozzle. The nozzle 21 has a slant "e" with respect to the horizontal plane of at least 50°. Said nozzles are also shown in Fig.7 which shows a side view of the parts illustrated in Fig.6 and in which for the sake of simplicity the membrane 20 and the net 15 have been omitted. As can be seen in this latter figure the suction nozzle is in communication with the hollow inside the shaft 11.

Inserted inside the cylindrical hollow of the shaft 11 is an Archimedean screw 24.

The operation of the filtering device can be described as follows. A pressure difference is maintained by means of a vacuum apparatus, not shown in the figures, between the inlet aperture A and the outlet aperture B of the machine, which ensures the flow of air to be purified through the machine. This flow enables the dust-laden air to be conveyed from chamber 8 to chamber 7 through the filter membrane 20 on which it rids itself of the dust.

To prevent clogging of the membrane 20 due to the formation of a layer of dust thereon the drum 10 is made to rotate with a speed of rotation in the region of 3-5 r.p.m.. At the same time compressed air is blown into the nozzle 22 by means of the ejector 30 of known type operating according to the Venturi tube principle. This causes the air to impinge upon the membrane 20 at the outlet aperture of the nozzle.

The pressure of the air jet emitted from 22 causes detachment at the interface between the two apertures of the layer of dust deposited on 20 and its introduction into the aperture of the nozzle 21. The slant "e" of the axis of the nozzle 21 having a value of at least 50° ensures the descent of the dust by gravity along the nozzle and its entry into the cylindrical cavity of the shaft 11. Here the screw 24 compresses the dust and conveys it to the outside through the valve 29, of known type. This valve closes the outlet aperture of the cylndrical cavity of the shaft 11 with a diaphragm consisting of a series of flexible plates designed to allow the compressed dust to exit and at the same time prevent the reflux of outside air into the drum which would otherwise occur due to the suction created by the vacuum maintained in chamber 7.

In order to more efficiently concentrate the air jet emitted from 22 on the membrane 20 a brush (not shown in the figures) with bristles of such a length as to ensure contact of their ends with the net 15 can be arranged along the edge of the outlet aperture of 22.

As also contemplated for the filtering device of European Patent no. 389 045 rotation of the drum 10 and the suction/blowing action of the nozzles 21 and 22 can be either continuous or intermittent. In this latter case a pressure switch (not shown in the figures) is provided in order to measure the difference in pressure between the inside of the drum and the chamber 7 and calibrated in such a way that when the difference in pressure exceeds a certain maximum limit corresponding to the beginning of the clogging up it causes rotation of the drum and the suction/blowing action of the nozzles 21 and 22 to come into operation.

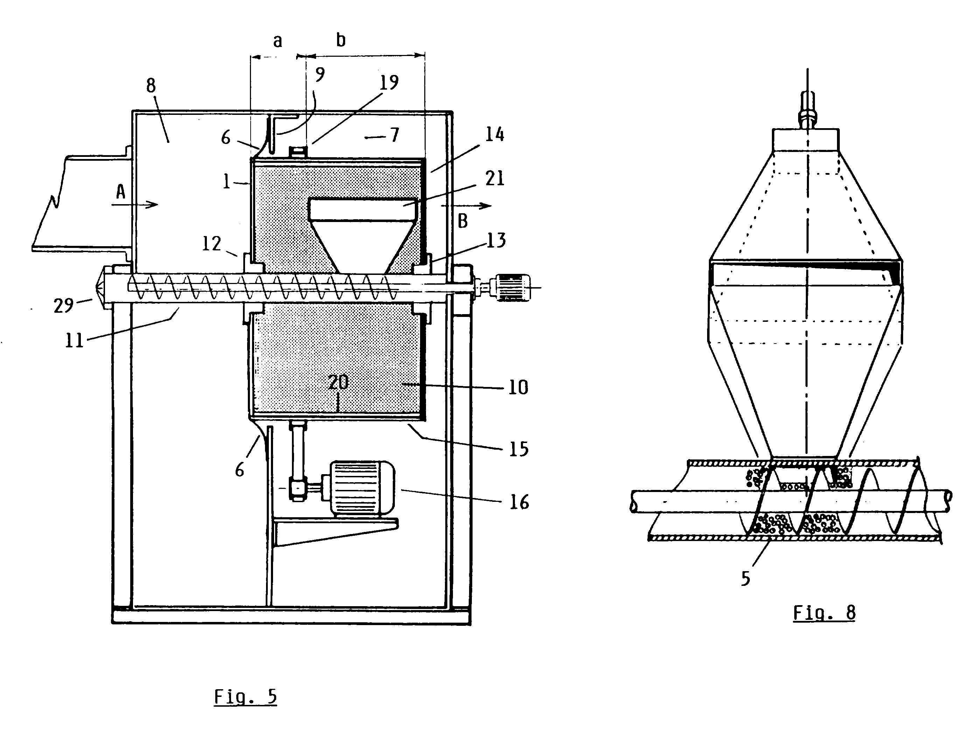

Very advantageously the air jet emitted from the ejector 30 can be pulsed, so as to render detachment from 20 of the layer of dust more efficient and less expensive. The above described embodiment is susceptible of the following variation. In fact, the aforementioned limit of 50° for the minimum inclination of the axis of the nozzle 21 can be exceeded whenever the perforated surface of the hollow shaft 11 opposite section 5 in which the nozzle is abutted (see figure 8) has holes small enough to retain the dust.

In this case the overpressures that the air jets emitted from 22 cause in 21 can find an outlet through the aforementioned holes, consequently creating a sufficient flow of air from the aperture of nozzle 21 towards the bottom of the latter to cause transfer of the dust in the nozzle even without an appreciable slant in the axis of the nozzle 21.

From a comparison between the system for collecting and compressing the dust separated from the filter as contemplated by the prior art (Fig. 2) and as contemplated by this invention the advantages of the latter are clearly evident.

In fact, with respect to the system of Fig.2, with the dust collection and compression system according to the invention it is possible to:
- eliminate the vacuum system (duct 26 and aspirator 25) and the relative drawbacks in terms of noise and the danger of the dust bursting into flames;
- eliminate the separate dust concentration, compression and collection system (jet filter 27 and Archimedean screw 28);
- consequently save in terms of costs of the aforesaid systems, energy consumption, maintenance and overall dimensions.

It is obvious that numerous modifications, adaptations, variations and replacements of elements with other functionally equivalent elements can be made to the non-restrictive embodiment previously described by way of example without however diverging from the protective sphere of the invention claimed herein. In particular the filter membrane 20 can be made with a net made of phosphorus bronze wire, textile threads, paper, glass fibres or textile fibres, instead of steel wire net.

## Claims

1. Filtering device for purifying a flow of aeriform fluid and in particular of air to rid it of dust contained therein comprising:
- a drum provided with a filter membrane along its cylindrical surface and rotating around a hollow shaft;
- at least one blowing nozzle emitting air jets, with its outlet facing onto the surface of the filter membrane on the side of the surface from which the filtered air flows;
- at least one nozzle for collecting the dust deposited on the surface of the filter membrane abutting upon said hollow shaft with its inlet facing onto the surface of said filter membrane on the side impinged by the flow of dust-laden air and arranged in a position opposite the outlet of the blowing nozzle;
characterized in that:
- an Archimedean screw is inserted in the aforesaid hollow shaft, which collects the dust descending by force of gravity onto the bottom of the collection nozzle and by rotating conveys it in compressed form out of the hollow shaft, the compressed dust outlet end of which is provided with a valve designed to allow the dust to exit and at the same time to prevent air from entering the hollow shaft;
- the axis of the dust collection nozzle slants by at least 50° compared to a horizontal plane.

2. Filtering device for purifying a flow of aeriform fluid and in particular of air to rid it of dust contained therein comprising:
- a drum provided with a filter membrane along its cylindrical surface and rotating around a hollow shaft;
- at least one blowing nozzle emitting air jets, with its outlet facing onto the surface of the filter membrane on the side of the surface from which the filtered air flows;
- at least one nozzle for collecting the dust deposited on the surface of the filter membrane and abutting upon said hollow shaft with its inlet facing onto the surface of said filter membrane on the side impinged by the flow of dust-laden air and arranged in a position opposite the outlet of the blowing nozzle;
characterized in that:
- an Archimedean screw is inserted in the aforesaid hollow shaft, which collects the dust descending by force of gravity onto the bottom of the collection nozzle and by rotating conveys it in compressed form out of the hollow shaft, the compressed dust outlet end of which is provided with a valve designed to allow the dust to exit and at the same time to prevent air from entering the hollow shaft;
- opposite the section in which the collection nozzle is abutted the hollow shaft has a perforated surface with holes of a sufficiently small diameter to retain the dust particles.

3. Filtering device as set forth in claims 1 or 2 characterized in that the filter membrane (20) consists of a pleated net made of stainless steel wire with pleats parallel to the axis of the drum and with the diameter of the wires and width of the aperture of the mesh in the region of a few dozen µ.

4. Filtering device as set forth in claims 1 or 2 characterized in that the filter membrane (20) consists of a pleated net made of textile threads with pleats parallel to the axis of the drum and with the diameter of the threads and width of the aperture of the mesh in the region of a few dozen µ.

5. Filtering device as set forth in claims 1 or 2 characterized in that arranged along the edge of the blowing outlet is a brush whose bristles have ends which brush over the filter membrane (20).

6. Filtering device as set forth in claims 1 or 2 characterized in that pulsed air jets are emitted from the blowing nozzle.

7. Filtering device as set forth in claims 6 characterized in that a pressure switch is provided for measuring the difference in pressure upstream and downstream of the membrane (20) and calibrated at a pre-established maximum value of said difference exceeding which the pressure switch causes drum rotation and emission of air jets from the blowing nozzle.
